# EUROPEAN PATENT SPECIFICATION

(11) **EP 2 764 055 B1**
(45) Date of publication and mention of the grant of the patent: **21.03.2018**
(21) Application number: 12780584.4
(22) Date of filing: 05.10.2012
(51) Int. Cl.: C08L 83/04, C08K 5/00

(54) **METHOD OF FORMING A GEL HAVING IMPROVED THERMAL STABILITY**
VERFAHREN ZUR HERSTELLUNG EINES GELS MIT VERBESSERTER WÄRMESTABILITÄT
PROCÉDÉ DE FORMATION D'UN GEL À STABILITÉ THERMIQUE AMÉLIORÉE

(30) Priority: 06.10.2011 US 201161544001 P
(43) Date of publication of application: 13.08.2014
(73) Proprietor: Dow Corning Corporation, Midland, Michigan 48686-0994 (US); Dow Corning Korea Ltd, Seoul 135-729 (KR)
(72) Inventor: DOWLAND, Matt, D., Midland, MI 48640 (US); HYUN, Daesup, Midland, Michigan 48642 (KR); KENNAN, John, J., Midland, MI 48640 (US); LARSON, Kent, R., Midland, MI 48642 (US); SCHMIDT, Randall, G., Midland, MI 48642 (US); XU, Shengqing, Midland, MI 48642 (US)
(74) Representative: Murgitroyd & Company
(86) International application number: PCT/US2012/059015
(87) International publication number: WO 2013/052838

(56) References cited:
- EP-A2- 0 231 519
- GB-A- 2 270 522
- US-A1- 2009 082 517

## Description

### FIELD OF THE DISCLOSURE

The present disclosure generally relates to a method of forming a gel that is a hydrosilylation reaction product having improved thermal stability.

### DESCRIPTION OF THE RELATED ART

Typical silicones have excellent stress-buffering properties, electrical properties, resistance to heat, and weather-proof properties and can be used in many applications. In many applications, silicones can be used to transfer heat away from heat-generating electronic components. However, when used in high performance electronic articles that include electrodes and small electrical wires, typical silicones tend to harden, become brittle, and crack, after exposure to long operating cycles and high heat. The hardening and cracking disrupt or destroy the electrodes and wires thereby causing electrical failure. Accordingly, there remains an opportunity to develop an improved silicone.

### SUMMARY OF THE DISCLOSURE AND ADVANTAGES

The present invention provides a gel that has improved thermal stability and a method of forming a gel that has improved thermal stability. Also provided is an electronic article comprising an electronic component and a gel having improved thermal stability. Preferred embodiments of the invention are set forth in the dependent claims. The gel is the hydrosilylation reaction product of (A) an organopolysiloxane having an average of at least 0.1 silicon-bonded alkenyl group per molecule and (B) a cross-linker having an average of at least 2 silicon-bonded hydrogen atoms per molecule. (A) and (B) react via hydrosilylation in the presence of (C) a hydrosilylation catalyst and (D) a heated reaction product of iron acetylacetonate. The iron acetylacetonate is present prior to heating in an amount of from about 0.05 to about 30 weight percent based on a total weight of (A) and (B). The method includes the step of (I) heating the iron acetylacetonate in the presence of (E) a silicone fluid at a temperature of at least 120°C to form the (D) heated reaction product of the iron acetylacetonate. The method also includes the step of (II) combining (A), (B), (C) and (D) to effect the hydrosilylation reaction of (A) and (B) in the presence of (C) and (D) to form the gel.

The (D) heated reaction product allows the gel to maintain low Young's modulus (i.e., low hardness and viscosity) properties even after extensive heat ageing. A gel that has low modulus is less prone to hardening, becoming brittle, and cracking, after exposure to long operating cycles and high heat, decreasing the chance that, when used in an electronic article, any electrodes or wires will be damaged, thereby decreasing the chance that electrical failure will occur.

Associated methods are also described herein to aid understanding of the invention, but these do not form part of the claimed invention.

Examples or embodiments described herein which do not fall under the definition of the claims do not form part of the present invention.

### BRIEF DESCRIPTION OF THE DRAWINGS

Other advantages of the present disclosure will be readily appreciated, as the same becomes better understood by reference to the following detailed description when considered in connection with the accompanying drawings.
Figure 1 is an electron micrograph of Fe₂O₃ particles in a silicone fluid wherein the particles are formed from heating iron acetylacetonate in the fluid. These Fe₂O₃ particles are representative of the (D) heated reaction product of iron acetylacetonate used to form Gels 1-6 of the Examples and also used to form samples of Gel 6 in the first series of the Examples.
Figure 2 is an electron micrograph of Fe₂O₃ particles in a silicone fluid wherein the particles are purchased from Sigma Aldrich, St Louis, MO. These Fe₂O₃ particles are representative of the "nano-sized" particles used to form comparative samples of Gel 6 of the second series of the Examples.
Figure 3 is an electron micrograph of Fe₂O₃ particles in a silicone fluid wherein the particles are purchased from Sigma Aldrich. These Fe₂O₃ particles are representative of the "micro-sized" particles used to form comparative samples of Gel 6 of the third series of the Examples.
Figure 4 is a representative transmission electron micrograph (TEM) image of the (D) heated reaction product of iron acetylacetonate (Fe (acac)) in the form of nanoparticles) dispersed in Gel 4 of the Examples.

### DETAILED DESCRIPTION OF THE DISCLOSURE

The terminology "hydrosilylation reaction product" describes that (A) and (B) react in a hydrosilylation reaction in the presence of (C) and (D). Typically, (A) and (B) react such that the gel forms and cures, either partially or completely.

### (A) Organopolysiloxane:

The (A) organopolysiloxane may be a single polymer or may include two or more polymers that differ in at least one of the following properties: structure, viscosity, average molecular weight, siloxane units, and sequence. The (A) organopolysiloxane has an average of at least 0.1 silicon-bonded alkenyl group per individual polymer molecule, i.e. there is, on average, at least one silicon-bonded alkenyl group per 10 individual polymer molecules. More typically, the (A) organopolysiloxane has an average of 1 or more silicon-bonded alkenyl groups per molecule. In various examples, the (A) organopolysiloxane has an average of at least 2 silicon-bonded alkenyl groups per molecule. The (A) organopolysiloxane may have a molecular structure that is in linear form or branched linear form or in dendrite form. The (A) organopolysiloxane may be or may include a single (type of) polymer, a copolymer, or a combination of two or more polymers. The (A) organopolysiloxane may be further defined as an organoalkylpolysiloxane.

The silicon-bonded alkenyl groups of the (A) organopolysiloxane are not particularly limited but typically are defined as one or more of vinyl, allyl, butenyl, pentenyl, hexenyl, or heptenyl groups. Each alkenyl group may be the same or different and each may be independently selected from all others. Each alkenyl group may be terminal or pendant. In one example, the (A) organopolysiloxane includes both terminal and pendant alkenyl groups.

The (A) organopolysiloxane may also include silicon-bonded organic groups including, monovalent organic groups free of aliphatic unsaturation. These monovalent organic groups may have at least one and as many as 2, 3, 4, 5, 6, 7, 8, 9, 10, 11, 12, 14, 16, 18, and 20 carbon atoms, and are exemplified by, but not limited to, alkyl groups such as methyl, ethyl, and isomers of propyl, butyl, t-butyl, pentyl, hexyl, heptyl, octyl, nonyl, decyl, undecyl, dodecyl, tetradecyl, hexadecyl, octadecyl, and eicosanyl; cycloalkyl groups such as cyclopentyl and cyclohexyl; and aromatic (aryl) groups such as phenyl, tolyl, xylyl, benzyl, and 2-phenylethyl; and 3,3,3,-trifluoropropyl, and similar halogenated alkyl groups. In certain examples, the organic groups are methyl or phenyl groups.

The (A) organopolysiloxane may also include terminal groups that may be further defined as alkyl or aryl groups as described above, and/or alkoxy groups exemplified by methoxy, ethoxy, or propoxy groups, or hydroxyl groups.

The (A) organopolysiloxane may have one of the following formulae:

Formula (I) : R¹₂R²SiO(R¹₂SiO)_{d}(R¹R²SiO)ₑSiR¹₂R²,

Formula (II) : R¹₃SiO(R¹₂SiO)_{f}(R¹R²SiO)_{g}SiR¹₃,

or combinations thereof.

In formulae (I) and (II), each R¹ is independently a monovalent organic group free of aliphatic unsaturation and each R² is independently an aliphatically unsaturated organic group. Suitable monovalent organic groups of R¹ include, but are not limited to, alkyl groups having 1 to 20, 1 to 15, 1 to 10, 5 to 20, 5 to 15, or 5 to 10 carbon atoms, e.g. methyl, ethyl, and isomers of propyl, butyl, t-butyl, pentyl, octyl, undecyl, and octadecyl; cycloalkyl groups such as cyclopentyl and cyclohexyl; and aryl groups such as phenyl, tolyl, xylyl, benzyl, and 2-phenylethyl. Each R² is independently an aliphatically unsaturated monovalent organic group, exemplified by alkenyl groups such as vinyl, allyl, butenyl, pentenyl, hexenyl, or heptenyl groups. It is also contemplated that R² may include halogen atoms or halogen groups.

Subscript "d" typically has an average value of at least 0.1, more typically of at least 0.5, still more typically of at least 0.8, and most typically, of at least 2. Alternatively subscript "d" may have an average value ranging from 0.1 to 2000. Subscript "e" may be 0 or a positive number. Further, subscript "e" may have an average value ranging from 0 to 2000. Subscript "f' may be 0 or a positive number. Further, subscript "f' may have an average value ranging from 0 to 2000. Subscript "g" has an average value of at least 0.1, typically at least 0.5, more typically at least 0.8, and most typically, at least 2. Alternatively, subscript "g" may have an average value ranging from 0.1 to 2000.

In various examples, the (A) organopolysiloxane is further defined as an alkenyldialkylsilyl end-blocked polydialkylsiloxane which may itself be further defined as vinyldimethylsilyl end-blocked polydimethylsiloxane. The (A) organopolysiloxane may be further defined as a dimethylpolysiloxane capped at one or both molecular terminals with dimethylvinylsiloxy groups; a dimethylpolysiloxane capped at one or both molecular terminals with methylphenylvinylsiloxy groups; a copolymer of a methylphenylsiloxane and a dimethylsiloxane capped at both one or both molecular terminals with dimethylvinylsiloxy groups; a copolymer of diphenylsiloxane and dimethylsiloxane capped at one or both molecular terminals with dimethylvinylsiloxy groups, a copolymer of a methylvinylsiloxane and a dimethylsiloxane capped at one or both molecular terminals with dimethylvinylsiloxy groups; a copolymer of a methylvinylsiloxane and a dimethylsiloxane capped at one or both molecular terminals with dimethylvinylsiloxy groups; a methyl (3,3,3-trifluoropropyl) polysiloxane capped at one or both molecular terminals with dimethylvinylsiloxy groups; a copolymer of a methyl (3,3,3-trifluoropropyl) siloxane and a dimethylsiloxane capped at one or both molecular terminals with dimethylvinylsiloxy groups; a copolymer of a methylvinylsiloxane and a dimethylsiloxane capped at one or both molecular terminals with silanol groups; a copolymer of a methylvinylsiloxane, a methylphenylsiloxane, and a dimethylsiloxane capped at one or both molecular terminals with silanol groups; or an organosiloxane copolymer composed of siloxane units represented by the following formulae: (CH₃)₃SiO_{½}, (CH₃)₂ (CH₂=CH)SiO_{½}, CH₃SiO_{3/2}, (CH₃)₂SiO_{2/2}, CH₃PhSiO_{2/2} and Ph₂SiO_{2/2}.

The (A) organopolysiloxane may further include a resin such as an MQ resin defined as including, consisting essentially of, or consisting of R^{x}₃SiO_{1/2} units and SiO_{4/2} units, a TD resin defined as including, consisting essentially of, or consisting of R^{x}SiO_{3/2} units and R^{x}₂SiO_{2/2} units, an MT resin defined as including, consisting essentially of, or consisting of R^{x}₃SiO_{1/2} units and R^{x}SiO_{3/2} units, an MTD resin defined as including, consisting essentially of, or consisting of R^{x}₃SiO_{1/2} units, R^{x}SiO_{3/2} units, and R^{x}₂SiO_{2/2} units, or a combination thereof. R^{x} designates any monovalent organic group, for example but is not limited to, monovalent hydrocarbon groups and monovalent halogenated hydrocarbon groups. Monovalent hydrocarbon groups include, but are not limited to, alkyl groups having 1 to 20, 1 to 15, 1 to 10, 5 to 20, 5 to 15, or 5 to 10 carbon atoms, e.g. methyl, ethyl, and isomers of propyl, butyl, t-butyl, pentyl, octyl, undecyl, and octadecyl; cycloalkyl groups such as cyclohexyl; alkenyl groups such as vinyl, allyl, butenyl, and hexenyl; alkynyl groups such as ethynyl, propynyl, and butynyl; and aryl groups such as phenyl, tolyl, xylyl, benzyl, and 2-phenylethyl. In one example, the (A) organopolysiloxane is free of halogen atoms. In another example, the (A) organopolysiloxane includes one or more halogen atoms.

### (B) Cross-Linker:

The (B) cross-linker has an average of at least 2 silicon-bonded hydrogen atoms per molecule and may be further defined as, or include, a silane or a siloxane, such as a polyorganosiloxane. The (B) cross-linker may include more than 2, 3, or even more than 3, silicon-bonded hydrogen atoms per molecule. The (B) cross-linker may have a linear, branched, or partially branched linear, cyclic, dendrite, or resinous molecular structure. The silicon-bonded hydrogen atoms may be terminal or pendant. Alternatively, the (B) cross-linker may include both terminal and pendant silicon-bonded hydrogen atoms.

In addition to the silicon-bonded hydrogen atoms, the (B) cross-linker may also include monovalent hydrocarbon groups which do not contain unsaturated aliphatic bonds, such as methyl, ethyl, and isomers of propyl, butyl, t-butyl, pentyl, hexyl, heptyl, octyl, decyl, undecyl, dodecyl, or similar alkyl groups e.g. alkyl groups having 1 to 20, 1 to 15, 1 to 10, 5 to 20, 5 to 15, or 5 to 10 carbon atoms; cyclopentyl, cyclohexyl, or similar cycloalkyl groups; phenyl, tolyl, xylyl, or similar aryl groups; benzyl, phenethyl, or similar aralkyl groups; or 3,3,3- trifluoropropyl, 3-chloropropyl, or similar halogenated alkyl group. Preferable are alkyl and aryl groups, in particular, methyl and phenyl groups.

The (B) cross-linker may also include siloxane units including, but not limited to, HR³₂SiO_{1/2}, R³₃SiO_{1/2}, HR³SiO_{2/2}, R³₂SiO_{2/2}, R³SiO_{3/2}, and SiO_{4/2} units. In the preceding formulae, each R³ is independently selected from monovalent organic groups free of aliphatic unsaturation. In various examples, the (B) cross-linker includes or is a compound of the formulae:

Formula (III) R³₃SiO(R³₂SiO)ₕ(R³HSiO)ᵢSiR³₃,

Formula (IV) R³₂HSiO(R³₂SiO)ⱼ(R³HSiO)ₖSiR³₂H,

or a combination thereof.

In formulae (III) and (IV) above, subscript "h" has an average value ranging from 0 to 2000, subscript "i" has an average value ranging from 2 to 2000, subscript "j" has an average value ranging from 0 to 2000, and subscript "k" has an average value ranging from 0 to 2000. Each R³ is independently a monovalent organic group. Suitable monovalent organic groups include alkyl groups having 1 to 20, 1 to 15, 1 to 10, 5 to 20, 5 to 15, or 5 to 10 carbon atoms, e.g. methyl, ethyl, and isomers of propyl, butyl, t-butyl, pentyl, octyl, decyl, undecyl, dodecyl, and octadecyl; cycloalkyl such as cyclopentyl and cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl.

The (B) cross-linker may alternatively be further defined as a methylhydrogen polysiloxane capped at both molecular terminals with trimethylsiloxy groups; a copolymer of a methylhydrogensiloxane and a dimethylsiloxane capped at both molecular terminals with trimethylsiloxy groups; a dimethylpolysiloxane capped at both molecular terminals with dimethylhydrogensiloxy groups; a methylhydrogenpolysiloxane capped at both molecular terminals with dimethylhydrogensiloxy groups; a copolymer of a methylhydrogensiloxane and a dimethylsiloxane capped at one or both molecular terminals with dimethylhydrogensiloxy groups; a cyclic methylhydrogenpolysiloxane; and/or an organosiloxane composed of siloxane units represented by the following formulae: (CH₃)₃ SiO_{½}, (CH₃)₂HSiO_{½}, and SiO_{4/2}; tetra(dimethylhydrogensiloxy) silane, or methyl-tri(dimethylhydrogensiloxy) silane.

It is also contemplated that the (B) cross-linker may be or include a combination of two or more organohydrogenpolysiloxanes that differ in at least one of the following properties: structure, average molecular weight, viscosity, siloxane units, and sequence. The (B) cross-linker may also include a silane. Dimethylhydrogensiloxy-terminated poly dimethylsiloxanes having relatively low degrees of polymerization (DP) (e.g., DP ranging from 3 to 50) are commonly referred to as chain extenders, and a portion of the (B) cross-linker may be or include a chain extender. In one example, the (B) cross-linker is free of halogen atoms. In another example, the (B) cross-linker includes one or more halogen atoms per molecule. It is contemplated that the gel, as a whole, may be free of halogen atoms or may include halogen atoms.

### (C) Hydrosilylation Catalyst:

The (C) hydrosilylation catalyst is not particularly limited and may be any known in the art. In one example, the (C) hydrosilylation catalyst includes a platinum group metal selected from platinum, rhodium, ruthenium, palladium, osmium or iridium, organometallic compounds thereof, or combinations thereof. In another example, the (C) hydrosilylation catalyst is further defined as a fine platinum metal powder, platinum black, platinum dichloride, platinum tetrachloride; chloroplatinic acid, alcohol-modified chloroplatinic acid, chloroplatinic acid hexahydrate; and complexes of such compounds, such as platinum complexes of olefins, platinum complexes of carbonyls, platinum complexes of alkenylsiloxanes, e.g. 1,3-divinyltetramethyldisiloxane, platinum complexes of low molecular weight organopolysiloxanes, for example 1,3-diethenyl-1,1,3,3 -tetramethyldisiloxane, complexes of chloroplatinic acid with β-diketones, complexes of chloroplatinic acid with olefins, and complexes of chloroplatinic acid with 1,3-divinyltetramethyldisiloxane.

Alternatively, the (C) hydrosilylation catalyst may be further defined as a rhodium compound, such as those expressed by formulae: RhX₃[(R⁴)₂S]₃; (R⁵₃P)₂Rh(CO)X, (R⁵₃P)₂Rh(CO)H, Rh₂X₂Y₄, H_{f}Rh_{g}(En)ₕClᵢ, or Rh[O(CO)R]₃₋ⱼ (OH)j, wherein each X is independently a hydrogen atom, chlorine atom, bromine atom, or iodine atom, each Y is independently a methyl group, ethyl group, or a similar alkyl group, CO, C₈H₁₄, or 0.5 C₈H₁₂; each R⁴ is independently a methyl, ethyl, propyl, or a similar alkyl group; a cycloheptyl, cyclohexyl, cyclopentyl, or a similar cycloalkyl group; or a phenyl, xylyl or a similar aryl group; each R⁵ is independently a methyl group, ethyl group, or a similar alkyl group; phenyl, tolyl, xylyl, or a similar aryl group; methoxy, ethoxy, or a similar alkoxy group, wherein each "En" is ethylene, propylene, butene, hexene, or a similar olefin; subscript "f" is 0 or 1; subscript "g" is 1 or 2; subscript "h" is an integer from 1 to 4; subscript "i" is 2, 3, or 4; and subscript "j" is 0 or 1. Particularly suitable but non-limiting examples of rhodium compounds are RhCl(Ph₃P)₃, RhCl₃[S(C₄H₉)₂]₃, [Rh(O₂CCH₃)₂]₂, Rh(OCCH₃)₃, Rh₂(C₈H₁₅O₂)₄, Rh(C₅H₇O₂)₃, Rh(C₅H₇O₂)(CO)₂, and Rh(CO)[Ph₃P](C₅H₇O₂).

The (C) hydrosilylation catalyst may also be further defined as an iridium group compound represented by the following formulae: Ir(OOCCH₃)₃, Ir(C₅H₇O₂)₃, [Ir(Z)(En)₂]₂, or [Ir(Z)(Dien)]₂ wherein each "Z" is chlorine atom, bromine atom, iodine atom, or a methoxy group, ethoxy group, or a similar alkoxy group; each "En" is ethylene, propylene, butene, hexene, or a similar olefin; and "Dien" is (cyclooctadiene)tetrakis(triphenyl). The (C) hydrosilylation catalyst may also be palladium, a mixture of palladium black and triphenylphosphine. The (C) hydrosilylation catalyst and/or any of the aforementioned compounds may be microencapsulated in a resin matrix or coreshell type structure, or may be mixed and embedded in an thermoplastic organic resin powder, e.g. a methylmethacrylate resin, carbonate resin, polystyrene resin, silicone resin, or similar resin. Typically, the (C) hydrosilylation catalyst is present/utilized in an amount of from 0.01 to 1,000 ppm, alternatively 0.1 to 500 ppm alternatively 1 to 500 ppm, alternatively 2 to 200, alternatively 5 to 150 ppm, based on the total weight of (A) and (B).

### (D) Heated Reaction Product of Iron Acetylacetonate:

The (D) heated reaction product of the iron acetylacetonate (acac) is typically formed by heating the iron acetylacetonate in the presence of oxygen, air, or an inert atmosphere.

Iron acetylacetonate may be further defined as one of, or a mixture of, iron(III) acetylacetonate and/or iron(II) acetylacetonate. Iron(II) acetylacetonate, also known in the art as a 2,4-pentanedione iron(II) derivative, Fe(acac)₂, and ferrous acetylacetonate, has the formula [CH₃COCH=C(O)CH₃]₂Fe, bearing the CAS number of 14024-17-0. Iron(III) acetylacetonate, also known in the art as 2,4-pentanedione iron(III) derivative, Fe(acac)₃, ferric acetylacetonate, tris(acetylacetonato) iron(III), and iron(III) 2,4-pentanedionate, has the formula Fe(C₅H₇O₂)₃, bearing the CAS number 14024-18-1.

Without intending to be bound by any particular theory, it is believed that the iron acetylacetonate, upon heating, at least partially oxidizes to form iron oxide(s). Moreover, it is also believed that Si-O-Fe bonds may also be formed. It is also believed that, upon heating, all or a portion of the acetylacetonate (ligand) is evaporated. In one example, the iron acetylacetonate reacts with oxygen in the air to oxidize the iron acetylacetonate and form iron oxide. The iron acetylacetonate may form iron oxide and other compounds upon heating.

The iron acetylacetonate is present prior to heating in an amount of from about 0.05 to about 30 weight percent based on a total weight of (A) and (B). The iron oxide(s) may be present in an amount of from about 0.05 to about 5, about 0.1 to about 5, about 0.1 to about 1, about 0.05 to about 1, about 1 to about 5, about 2 to about 4, about 2 to about 3, about 5 to about 25, about 10 to about 20, or about 15 to about 20, weight percent based on a total weight of (A) and (B). It is contemplated that less than 100 percent by weight of the iron acetylacetonate may be converted to the iron oxide(s) upon heating. For example, upon heating, some of the iron acetylacetonate may not react, some may form iron oxide(s), some may react to form Si-O-Fe bonds, and/or some may form other compounds not described herein. Alternatively, all or almost all (> 85, 90, 95 or 99 wt. %) of the iron acetylacetonate may be converted to one or more forms of iron oxide(s). Percentage conversion may be determined using X-ray scattering and TEM/EDX (Transmission Electron Microscopy/Energy Dispersive X-ray Spectrometry). Without intending to be limited by any particular theory, it is believed that increased presence of acetylacetonate ligands may increase the chance of bubbling and degradation of the gel. Typically, a maximum amount of acetylacetonate is evaporated and/or converted into other species.

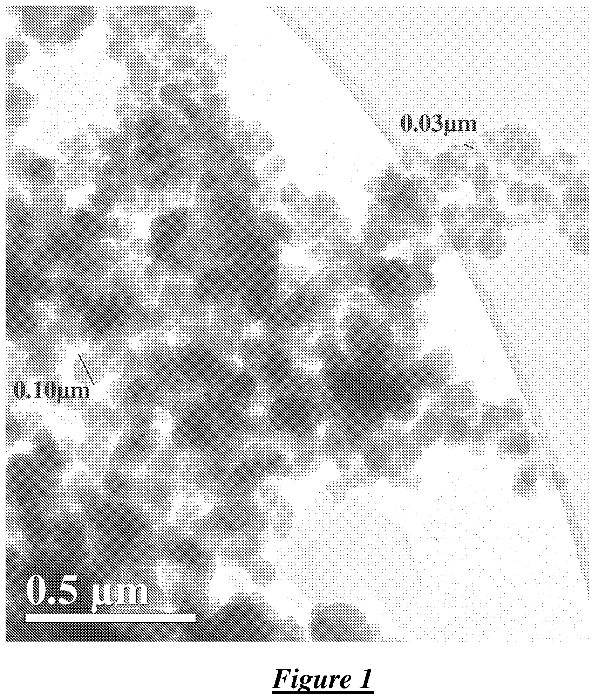

The iron oxide may be further defined as one or more of iron (II) oxide, iron (II,III) oxide, or iron (III) oxide. The iron oxide is not particularly limited relative to particle size. In various examples, the iron oxide has an average particle size of less than about 10,000 nm, less than about 5,000 nm, less than about 1,000 nm, less than about 500 nm, less than about 100 nm, less than about 50 nm, or less than about 30 nm. In another example, the iron oxide is further described as nano-sized iron oxide. An electron micrograph of one example of iron oxide particles in a polydimethylsiloxane fluid is shown in Figure 1.

### (E) Silicone Fluid:

The gel may also be formed utilizing (E) a silicone fluid. The (E) silicone fluid may be alternatively described as only one of, or as a mixture of, a functional silicone fluid and/or a non-functional silicone fluid. In one example, (E) is further defined as a polydimethylsiloxane, which is not functional. In another example, (E) is further defined as a vinyl functional polydimethylsiloxane. The terminology "functional silicone fluid" typically describes that the fluid is functionalized to react in a hydrosilylation reaction, i.e., include unsaturated groups and/or Si-H groups. However, it is contemplated that the fluid may include one or more additional functional groups in addition to, or in the absence of, one or more unsaturated and/or Si-H groups. In various examples, (E) is as described in one or more of U.S. Pat. Nos. 6,020,409; 4,374,967; and/or 6,001,918. (E) is not particularly limited to any structure or viscosity.

(E) may or may not participate as a reactant with (A) and (B) in a hydrosilylation reaction. In one embodiment, (E) is a functional silicone fluid and reacts with (A) and/or (B) in the presence of (C) and (D). Said differently, the hydrosilylation reaction product may be further defined as the hydrosilylation reaction product of (A), (B), and (E) the functional silicone fluid wherein (A), (B), and (E) react via hydrosilylation in the presence of (C) and (D). In another embodiment, (A) and (B) react via hydrosilylation in the presence of (C), (D), and (E) a non-functional silicone fluid.

One or more of (A)-(E) may be combined together to form a mixture and the mixture may further react with remaining components of (A) - (E) to form the gel, with (E) being an optional component in either the mixture or as a remaining component. In other words, any combination of one or more (A)-(E) may react with any other combination of one or more of (A)-(E) so long as the gel is formed.

### Optional Additives:

Any one or more of (A)-(E), or a mixture comprising two or more of (A)-(E), may be independently combined with one or more additives including, but not limited to, inhibitors, spacers, electrical and/or heat conducting and/or non-conducting fillers, reinforcing and/or non-reinforcing fillers, filler treating agents, adhesion promoters, solvents or diluents, surfactants, flux agents, acid acceptors, hydrosilylation stabilizers, stabilizers such as heat stabilizers and/or UV stabilizers, UV sensitizers, and the like. Examples of the aforementioned additives are described in U.S. Prov. App. Ser. No. 61/436,214, filed on January 26, 2011. It is also contemplated that one of more of (A)-(C) or any one or more of the additives may be as described in PCT/US2009/039588. It is also contemplated that the gel and/or the electronic article of this disclosure may be free of one or more of any of the aforementioned additives.

### Method of Forming the Gel:

Referring back to the method of forming the gel first introduced above, the method typically includes the steps of providing (A), providing (B), providing (C), providing the iron acetylacetonate, and optionally providing (E). Each may be provided independently or in conjunction with one or more of the others.

### (I) Heating the Iron Acetylacetonate to Form (D):

The method also includes the step of (I) heating the iron acetylacetonate to form the (D) heated reaction product of the iron acetylacetonate. The iron acetylacetonate is typically heated at a temperature of at least about 120°C, at least 130°C, at least 140°C, at least 150°C, at least 160°C, at least 170°C, at least 180°C, at least 190°C, or at least 200°C. In various examples, the iron acetylacetonate is heated at a temperature of from about 120 to 180, from 130 to 170, from 140 to 160, from 150 to 160, of from 120 to 200, of from 160 to 190, or about 180, °C. In one example, the iron acetylacetonate is heated to a temperature such that all or almost all (> 85, 90, 95 or 99 wt. %) of the acetylacetonate (ligands) evaporates. In another example, the iron acetylacetonate is heated to a temperature that is sufficient to oxidize the iron acetylacetonate to form the iron oxide. The acetylacetonate ligands may evaporate as the iron forms the iron oxide. The iron acetylacetonate may be heated using any heating mechanism including both direct and indirect heating and may be heated in air, oxygen, and/or an inert atmosphere. The time of heating of the iron acetylacetonate is not particularly limited. Several non-limiting examples include heating the iron acetylacetonate for times of from 30 minutes and above in the increment of 1 minute to about 120 minutes, for example from 60 to 180 minutes, from 60 to 120 minutes, from 30 to 60 minutes, from 100 to 120 minutes, or from 80 to 100 minutes.

In one example, the iron acetylacetonate is combined with a solvent, e.g. an organic solvent, prior to heating to form (D). The method may further include the step of removing most (e.g. > 95 or 99 wt %) or all of the solvent from the iron acetylacetonate prior to the step of heating. The solvent may be removed using heat, vacuum, and/or a sparge.

In various examples, the iron acetylacetonate is heated to remove solvent at any suitable temperature in a range above the room temperature to about 200°C, for example a temperature of from 20 to 200, from 30 to 190, from 40 to 180, from 50 to 170, from 60 to 160, from 70 to 150, from 80 to 140, from 90 to 130, from 100 to 120, or from 100 to 110, °C, with or without application of vacuum and/or sparge. In other examples, heat, vacuum, and/or sparge are applied for times of from 1 to 180 minutes, from 5 to 60 minutes, from 5 to 30 minutes, from 15 to 30 minutes, from 15 to 60 minutes, from 15 to 45 minutes, from 60 to 180 minutes, from 60 to 120 minutes, from 30 to 60 minutes, from 100 to 120 minutes, or from 80 to 100 minutes.

The method may include the step of heating the iron acetylacetonate to remove the solvent independently from the step of heating the iron acetylacetonate to form (D). In other words, the iron acetylacetonate may be heated to remove solvent prior to, and at a different temperature and/or for a different time, than the step of heating to form (D). In one example, the iron acetylacetonate is heated to a temperature of about 120°C to remove solvent and then further heated at a temperature of about 180°C to form (D). Alternatively, the step of heating to remove the solvent may be the same as heating to form (D).

### (II) Combining (A), (B), (C), and (D) to Effect the Hydrosilylation Reaction of (A) and (B):

The method also includes the step of (II) combining (A), (B), (C), and (D) to effect the hydrosilylation reaction of (A) and (B) in the presence of (C) and (D). It is contemplated that (A) and (B) may be heated to effect the hydrosilylation reaction and this heat may provide the heat for the step of (I) heating the iron acetylacetonate to form (D) and/or the step of heating the iron acetylacetonate to remove solvent. It is also contemplated that the step of combining and/or reacting (A) and (B) may include any other step known in the art as utilized during hydrosilylation reactions.

### Combining Iron acetylacetonate and (E) the Silicone Fluid:

In various examples, the method also includes the step of combining the iron acetylacetonate and (E) to form a mixture. The step of combining may occur before or after heating to form (D). It is contemplated that the mixture itself may be heated to form (D). Alternatively, the iron acetylacetonate and/or (E) may be independently heated and then combined. It is contemplated that the iron acetylacetonate and (E) may be combined together in any order and in any fashion to form the mixture. For example, an entire amount, or a series of portions, of the iron acetylacetonate may be added to (E) or vice versa. The iron acetylacetonate and (E) may be combined using any method known in the art including mixing, stirring, vortexing, etc. Typically, the iron acetylacetonate is added to (E) in an amount such that the iron acetylacetonate is present in an amount of from about 0.01 to about 30, from about 0.5 to about 10, or from about 0.5 to about 5, parts by weight per 100 parts by weight of the mixture of the iron acetylacetonate and (E). Similarly, (E) is typically added in an amount such that (E) is present in an amount of from about 70 to about 99.99, from about 90 to about 99.5, or from about 95 to 99.5, parts by weight per 100 parts by weight of the mixture of the iron acetylacetonate and (E). The iron acetylacetonate and (E) may be heated at any of the aforementioned temperatures and for any of the aforementioned times above.

The iron acetylacetonate and (E) are typically combined together in a reactor to form the mixture. However, the method is not limited to such as step. The iron acetylacetonate and (E) may be combined in any suitable container, reactor, or vessel to form the mixture. Various suitable containers, reactors, and vessels are known in the art.

In one example, the method includes the step of combining (A), (B), and (C) with the mixture of (D) and (E) to effect a hydrosilylation reaction of (A) and (B) in the presence of (C), (D), and (E) to form the gel. This step of combining typically occurs after the mixture of iron acetylacetonate and (E) is heated. Alternatively, (A)-(D) may be combined with (E). It is contemplated that any and all combinations of steps of adding each of (A)-(E) both independently and/or in conjunction with one or more of the others of (A)-(E) may be utilized in this disclosure.

It is also contemplated that (A) and (B) may cure with or in the presence of one of more of the aforementioned additives or other monomers or polymers described above or in any one of the documents incorporated herein by reference. As described above, (E) may or may not participate in the hydrosilylation reaction of (A) and (B). Typically, (A) and (B) are present, and/or reacted, in an amount such that a ratio of silicon-bonded hydrogen atoms to silicon-bonded alkenyl groups is less than about 1.3:1. This ratio may include or may not include any unsaturated and/or Si-H functionality of (E). Alternatively, the ratio may be about 1:1 or less than about 1:1. In still other examples, the ratio is less than 0.9:1, 0.8:1, 0.7:1, 0.6:1, or 0.5:1. Gel:

The hardness is measured and calculated as described below using a TA-23 probe. The gel typically has a hardness of less than about 1500 grams as measured after heat ageing for 1000 hours at 225°C. However, the gel is not limited to such a hardness. In one alternative example, the gel has a hardness of less than about 1500 grams as measured after heat ageing at 225°C for 500 hours. In other alternative examples, the gel has a hardness of less than 1400, 1300, 1200, 1100, 1000, 900, 800, 700, 600, 500, 400, 300, 200, 100, 90, 80, 70, 60, 50, 40, 30, or 20, grams as measured after heat ageing at 225°C or 250°C for 250 hours, for 500 hours, or for 1000 hours. In various examples, the gel has a hardness of less than 105, less than 100, less than 95, less than 90, less than 85, less than 80, less than 75, less than 70, less than 65, less than 60, less than 55, less than 50, less than 45, less than 40, less than 35, less than 30, less than 25, or less than 20, grams, as measured after heat ageing at 225°C for 500 hours. It is also contemplated that the hardness of the gel can be measured using different, but similar, heat ageing times and temperatures. The hardness of the gel may or may not initially decrease after heat ageing. It is contemplated that the hardness of the gel may remain lower after heat ageing than before or may eventually increase to a hardness that is greater, but typically only after long periods of time. In various examples, these hardness values vary by ± 5%, ± 10%, ± 15%, ± 20%, ± 25%, ± 30%, etc.

The hardness is calculated as the weight required to insert a TA-23 probe into the gel to a depth of 3 mm. More specifically, the method used to calculate hardness utilizes a Universal TA.XT2 Texture Analyzer (commercially available from Texture Technologies Corp., of Scaresdale, NY) or its equivalent and a TA-23 (0.5 inch round) probe. The Texture Analyzer has a force capacity of 55 lbs and moves the probe at a speed of 1.0 mm/s. The Trigger Value is 5 grams, the Option is set to repeat until count and to set count to 5, the Test Output is Peak, the force is measured in compression, and the container is a 4 oz wide-mouth, round glass bottle. All measurements are made at 25°C ± 5°C and 50% ± 4% relative humidity. Even more specifically, samples of the gel are prepared, cured, cooled to room temperature (25°C ± 5°C), and stabilized at room temperature for at least 0.5 hours, for 2 to 3 hours, or until a stable hardness is reached. The sample is then positioned on the test bed directly under the probe. The Universal TA.XT2 Texture Analyzer is then programmed with the aforementioned specific parameters according to the manufacturer's operating instructions. Five independent measurements are taken at different points on the surface of the gel. The median of the five independent measurements are reported. The test probe is wiped clean with a soft paper towel after each measurement is taken. The repeatability of the value reported (i.e., the maximum difference between two independent results) should not exceed 6 g at a 95% confidence level. Typically, the thickness of the sample is sufficient to ensure that when the sample is compressed, the force measurement is not influenced by the bottom of the bottle or the surface of the test bed. When performing measurements, the probe is typically not within 0.5 inch of the side of the sample.

The combination of (A) to (D), and optionally (E), before reaction to form the gel, typically has a viscosity less than about 100,000, 75,000, 50,000, 25,000, or 10,000, cps measured at 25°C using a Brookfield DV-II+ cone and plate viscometer with spindle CP-52 at 50 rpm. In various examples, the combination of (A) to (D), (and optionally (E)) before reaction to form the gel, has a viscosity of less than 9,500, less than 9,000, less than 8,500, less than 8,000, less than 7,500, less than 7,000, less than 6,500, less than 6,000, less than 5,500, less than 5,000, less than 4,500, less than 4,000, less than 3,500, less than 3,000, less than 2,500, less than 2,000, less than 1,500, less than 1,000, less than 500, less than 400, less than 300, less than 200, less than 100, less than 90, less than 80, less than 70, less than 60, less than 50, less than 40, less than 30, less than 20, or less than 10, cps measured at 25°C using a Brookfield DV-II+ cone and plate viscometer with spindle CP-52 at 50 rpm.

### Electronic Article:

The instant disclosure also provides an electronic article (hereinafter referred to as an "article.") The article may be a power electronic article. The article includes an electronic component and the gel disposed on the electronic component. The gel may be disposed on the electronic component such that the gel encapsulates, either partially or completely, the electronic component. Alternatively, the electronic article may include the electronic component and a first layer. The gel may be sandwiched between the electronic component and the first layer, may be disposed on and in direct contact with the first layer, and/or on and in direct contact with the electronic component. If the gel is disposed on and in direct contact with the first layer, the gel may still be disposed on the electronic component but may include one or more layers or structures between the gel and the electronic component. The gel may be disposed on the electronic component as a flat member, a hemispherical nubbin, a convex member, a pyramid, and/or a cone. The electronic component may be further defined as a chip, such as a silicon chip or a silicon carbide chip, one or more wires, one or more sensors, one or more electrodes, and the like.

The electronic article is not particularly limited and may be further defined as an insulated gate bipolar transistor (IGBT), a rectifier such as a Schottky diode, a PiN diode, a merged PiN/Schottky (MPS) rectifier and Junction barrier diode, a bipolar junction transistors (BJTs), a thyristor, a metal oxide field effect transistor (MOSFET), a high electron mobility transistor (HEMT), a static induction transistors (SIT), a power transistor, and the like. The electronic article can alternatively be further defined as power modules including one of more of the aforementioned devices for power converters, inverters, boosters, traction controls, industrial motor controls, power distribution and transportation systems. The electronic article can alternatively be further defined as including one or more of the aforementioned devices.

In addition, the first layer is not particularly limited and may be further independently defined as a semiconductor, a dielectric, metal, plastic, carbon fiber mesh, metal foil, a perforated metal foil (mesh), a filled or unfilled plastic film (such as a polyamide sheet, a polyimide sheet, polyethylene naphthalate sheet, a polyethylene terephthalate polyester sheet, a polysulfone sheet, a polyether imide sheet, or a polyphenylene sulfide sheet), or a woven or nonwoven substrate (such as fiberglass cloth, fiberglass mesh, or aramid paper). Alternatively, the first layer may be further defined as a semiconductor and/or dielectric film.

The disclosure also provides a method of forming the electronic article. The method may include one or more of the aforementioned steps of forming the gel, the step of providing the gel, and/or the step of providing the electronic component. Typically, the method includes the step of applying (A)-(D) and optionally (E) onto the electronic component and reacting (A) and (B) in the presence of (C) and (D) and optionally (E) to form the gel on the electronic component under the condition sufficient to form the gel without damaging the component. The gel may be formed on the electronic component. Alternatively, the gel may be formed apart from the electronic component and subsequently be disposed on the electronic component.

### EXAMPLES

A series of gels (Gels 1-6) are formed according to this disclosure. A series of comparative gel (Comparative Gels 1-4) is also formed but do not represent this disclosure. Each of the Gels 1-6 and the Comparative Gels 1-5 are evaluated to determine initial hardness and hardness after heat ageing. The compositions used to form each of the Gels and the results of the aforementioned evaluations are shown in Table 1 below.

### Heating of Iron(III) Acetylacetonate To Form (D) For Use In Gels 1 and 2:

200 g of SFD119 fluid (Dow Corning, vinyl terminated polydimethylsiloxane, as (E)) is introduced into a 500-ml flask equipped with a mechanical stirrer, thermometer, gas inlet and outlet. 4 g (2% by weight of SFD119) of iron(III) acetylacetonate (Fe(acac)₃, Aldrich, 97%)) as a solution in 16 g of dry tetrahydrofuran (THF)) is injected into the reactor to form a maroon-colored, uniform but cloudy dispersion. This dispersion is heated to 120°C with continuous stirring while purging N₂ through the flask to remove the THF (solvent). After about 15 min at 120°C, the purging gas is changed to air at a flow rate of 3 gallons/hour. The dispersion is stirred at a speed of 450 rpm and the temperature is increased to 180°C. The temperature is held at 180 ± 2°C for 80 minutes to form (D) and then cooled to room temperature. The final product is a uniformly brown liquid with a similar viscosity to SFD119. This liquid also includes Si-O-Fe bonds as determined using an FT-IR spectrometer.

### Heating of Iron(III) Acetylacetonate To Form (D) For Use In Gels 3-6:

200 g of SFD119 fluid (Dow Corning, vinyl terminated polydimethylsiloxane, as (E)) is introduced into a 500-ml flask equipped with a mechanical stirrer, thermometer, gas inlet and outlet. 6 g (3% by weight of SFD119) of iron(III) acetylacetonate (Fe(acac)₃, Aldrich, 97%)) as a solution in 24 g of dry tetrahydrofuran (THF)) is injected into the reactor to form a maroon-colored, uniform but cloudy dispersion. This dispersion is heated to 120°C with continuous stirring while purging N₂ through the flask to remove the THF (solvent). After about 20 min at 120°C, the purging gas is changed to air at a flow rate of 3 gallons/hour. The dispersion is stirred at a speed of 450 rpm and the temperature is increased to 180°C. The temperature is held at 180 ± 2°C for 100 minutes to form (D) and then cooled to room temperature. The final product is a uniformly brown liquid with a similar viscosity to SFD119. This liquid also includes Si-O-Fe bonds as determined using an FT-IR spectrometer.

### Formation of Gels 1-6:

To form these Gels, equal weight parts of Part A and Part B are mixed and de-aired to form a mixture. The mixture is then poured into a glass cup and cured at 150°C for one hour to form the Gels. Subsequently, the Gels are cooled and initial hardness is measured pursuant to the methods described in detail above. Then, the Gels are heat aged and again evaluated for hardness after heat ageing for 1000 hours at 225°C. In Table 1, all weight percentages in Part A are based on a total weight of Part A. All weight percentages in Part B are based on a total weight of Part B. The values for gel hardness in all tests below represent the average (mean) of 5 independent measurements of the respective Gel.

**TABLE 1**

| | **Gel 1** | **Gel 2** | **Gel 3** | **Gel 4** | **Gel 5** | **Gel 6** |
|---|---|---|---|---|---|---|
| **Part A** | | | | | | |
| **(A) Organopolysiloxane** | ∼ 90 wt% | ∼ 90 wt% | ∼ 90 wt% | ∼ 90 wt% | ∼ 90 wt% | ∼ 90 wt% |
| **(C) Hydrosilylation Catalyst** | ∼ 40 ppm | ∼ 40 ppm | ∼ 40 ppm | ∼ 40 ppm | ∼ 40 ppm | ∼ 40 ppm |
| **(D) Heated Reaction Product of Iron Acetylacetonate** | ∼ 0.1 wt % | ∼ 0.2 wt % | ∼ 0.5 wt % | ∼ 1 wt % | - 1.5 wt % | ∼ 2 wt % |
| **(E) Silicone Fluid** | - 10 wt % | - 10 wt % | - 10 wt % | - 10 wt % | - 10 wt % | ∼ 10 wt % |

| **Part B** | | | | | | |
|---|---|---|---|---|---|---|
| **(A) Organopolysiloxane** | - 88 wt % | - 88 wt % | - 88 wt % | ∼ 88 wt % | - 88 wt % | ∼ 88 wt % |
| **(B) Cross-Linker** | ∼ 1.6 wt % | ∼ 1.6 wt % | ∼ 1.6 wt % | ∼ 1.6 wt % | ∼ 1.6 wt % | ∼ 1.6 wt % |
| **(E) Silicone Fluid** | ∼ 10% | ∼ 10% | ∼ 10% | ∼ 10% | ∼ 10% | ∼ 10% |
| **Inhibitor** | ∼ 0.07 wt % | ∼ 0.07 wt % | ∼ 0.07 wt % | ∼ 0.07 wt % | ∼ 0.07 wt % | ∼ 0.07 wt % |
| **Initial Hardness Prior to Heat Ageing (g)** | ∼ 27 | ∼ 22 | ∼ 43 | ∼ 40 | ∼ 50 | ∼ 37 |
| **Final Hardness After Heat Ageing (g)** | ∼ 1757 | ∼ 1693 | ∼ 714 | ∼ 262 | ∼ 194 | ∼ 175 |

The (A) Organopolysiloxane is a dimethylvinylsiloxy terminated polydimethylsiloxane.

The (B) Cross-Linker is a trimethylsiloxy terminated dimethylmethylhydrogen silo xane.

The (C) Hydrosilylation Catalyst is a 1,3-divinyltetrmethyl disiloxane complex of platinum.

The (D) Heated Reaction Product of Iron Acetylacetonate is as described above.

The (E) Silicone Fluid is Dow Corning 200F silicone fluid.

The Inhibitor is tetramethyl tetravinyl cyclotetra siloxane.

### Formation of Comparative Gels 1A-5B:

Comparative Gels 1A-5B are formed using the same procedure and generally the same chemistry as Gels 1-6 above. However, Comparative Gels 1A-5B differ from Gels 1-6 as follows:

Comparative Gel 1A does not utilize any iron acetylacetonate or any (D) heated reaction product of any iron acetylacetonate.

Comparative Gel 1B utilizes the same weight percent of the iron(III) acetylacetonate that is described above relative to Gel 1, except that no heat is applied in this example. Accordingly, no (D) heated reaction product of iron acetylacetonate is utilized to form Comparative Gel 1B.

Comparative Gel 1C utilizes the same weight percent of the iron(III) acetylacetonate that is described above relative to Gel 4, except that no heat is applied in this example. Accordingly, no (D) heated reaction product of iron acetylacetonate is utilized to form Comparative Gel 1C.

Comparative Gel 2A utilizes zirconium acetylacetonate in place of iron(III) acetylacetonate in a weight percent that is described above relative to Gel 1C, except that no heat is applied in this example. Accordingly, no heated reaction product of zirconium acetylacetonate is utilized to form Comparative Gel 2A.

Comparative Gel 2B utilizes zirconium acetylacetonate in place of iron(III) acetylacetonate in a weight percent that is described above relative to Gel 4 and heated to form Comparative Gel 2B.

Comparative Gel 3A utilizes aluminum acetylacetonate in place of iron(III) acetylacetonate in a weight percent that is described above relative to Gel 1C, except that no heat is applied in this example. Accordingly, no heated reaction product of aluminum acetylacetonate is utilized to form Comparative Gel 3A.

Comparative Gel 3B utilizes aluminum acetylacetonate in place of iron(III) acetylacetonate in a weight percent that is described above relative to Gel 4 and heated to form Comparative Gel 3B.

Comparative Gel 4A utilizes copper acetylacetonate in place of iron(III) acetylacetonate in a weight percent that is described above relative to Gel 1C, except that no heat is applied in this example. Accordingly, no heated reaction product of copper acetylacetonate is utilized to form Comparative Gel 4A.

Comparative Gel 4B utilizes copper acetylacetonate in place of iron(III) acetylacetonate in a weight percent that is described above relative to Gel 4 and heated to form Comparative Gel 4B.

Comparative Gel 5A utilizes cerium acetylacetonate in place of iron(III) acetylacetonate in a weight percent that is described above relative to Gel 1C, except that no heat is applied in this example. Accordingly, no heated reaction product of cerium acetylacetonate is utilized to form Comparative Gel 5A.

Comparative Gel 5B utilizes cerium acetylacetonate in place of iron(III) acetylacetonate in a weight percent that is described above relative to Gel 4 and heated to form Comparative Gel 5B.

The results of the gel hardness evaluations are set forth in Table 2 below. The values for gel hardness set forth in all tests below represent the average (mean) of 5 independent measurements of the respective Gel, as determined using the procedure described above.

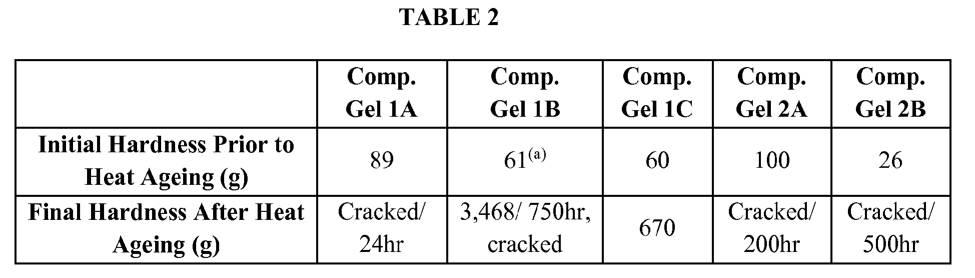

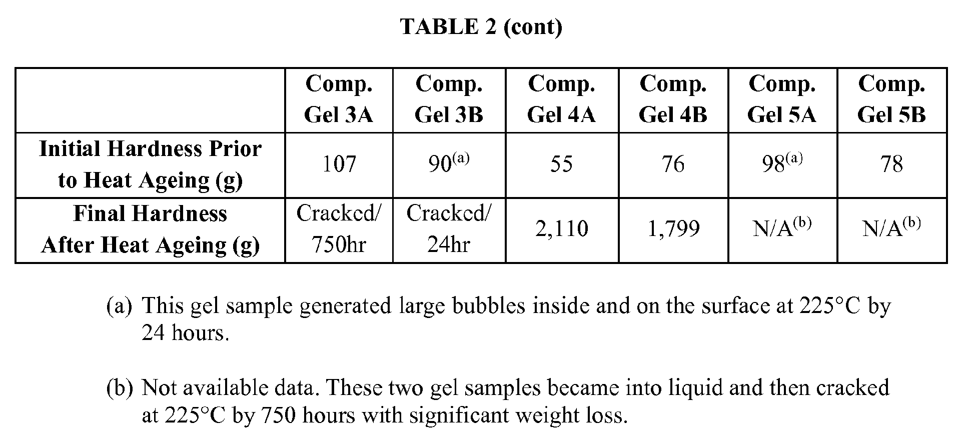

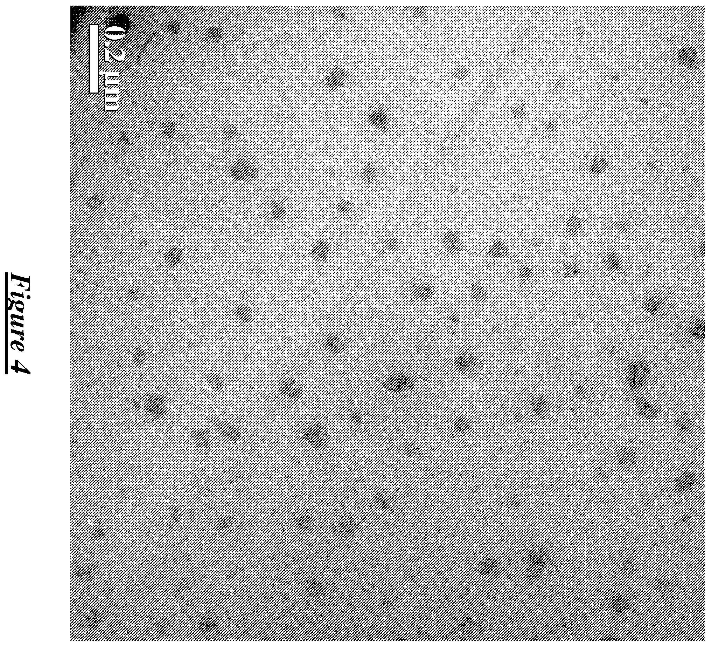

The data above establishes that the Comparative Gels do not exhibit the same unexpected decrease in hardness after heat ageing as Gels 1-6 of this disclosure. The iron(III) acetylacetonate in Gels 1-6 of this disclosure (see Figure 4) allows these gels to maintain low modulus (i.e., low hardness) properties even after extensive heat ageing. Maintenance of the low modulus properties allows the gel to be utilized in an electronic article with minimal impact on electrodes and electrical wires after heat ageing.

### Evaluation of Forms of Iron Oxide:

Additional samples of Gel 6 are further evaluated to determine the effect of various forms of iron oxide on the hardness of the gels and to evaluate whether the iron(III) acetylacetonate used in Gel 6 is converted, at least in part, to iron oxide *in-situ* after heating. More specifically, multiple samples of Gel 6 are formulated and evaluated.

In a first series, samples of Gel 6 are formulated as described above including the iron(III) acetylacetonate heated in the (E) silicone fluid. The (D) heated reaction product formed in these samples is illustrated in the electron micrograph of Figure 1.

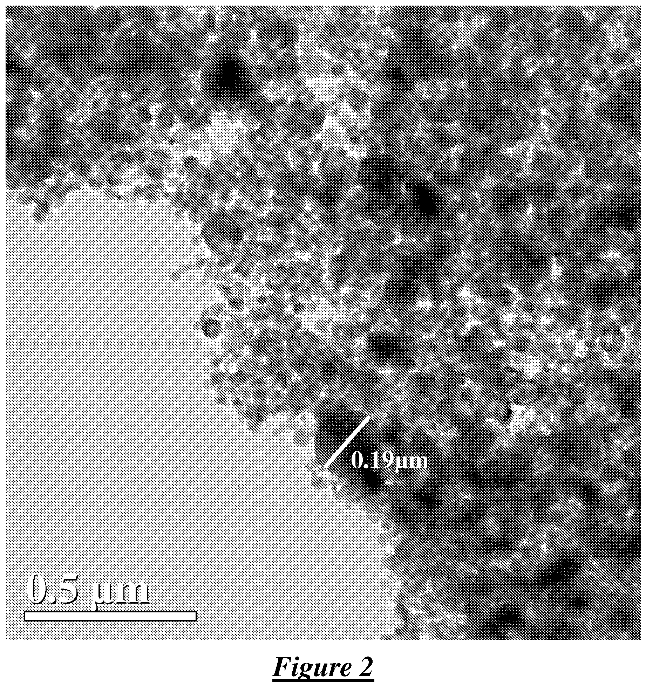

In a second series, samples of Gel 6 are formulated as described above except that nano-sized Fe₂O₃, as purchased from Sigma Aldrich and having a particle size of less than 50 nm, is utilized in place of the iron(III) acetylacetonate. Said differently, no (D) heated reaction product is used in this second series. Instead, the nano-sized Fe₂O₃ is substituted for the (D) heated reaction product. The nano-sized Fe₂O₃ used in this second series is illustrated in the electron micrograph of Figure 2.

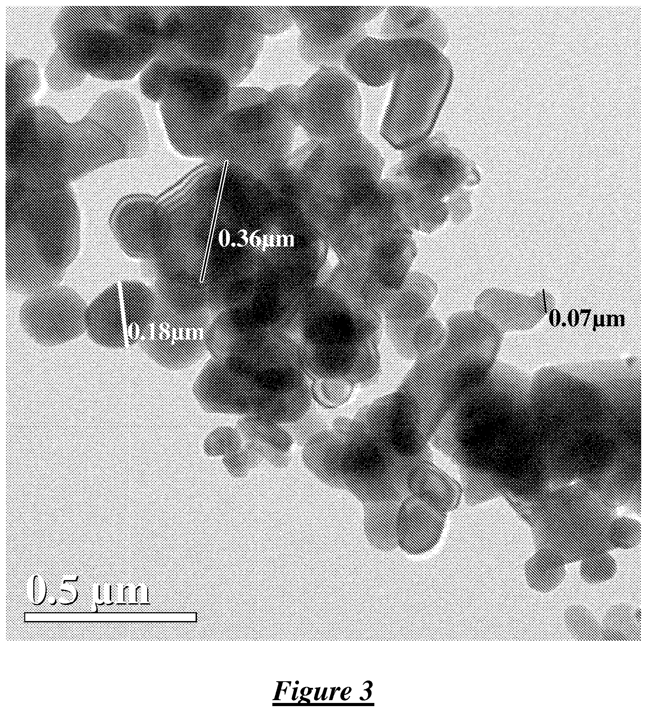

In a third series, samples of Gel 6 are formulated as described above except that micro-sized Fe₂O₃, as purchased from Sigma Aldrich and having a particle size of less than 5 µm, is utilized in place of the iron(III) acetylacetonate. Said differently, no (D) heated reaction product is used in this third series. Instead, the micro-sized Fe₂O₃ is substituted for the (D) heated reaction product. The micro-sized Fe₂O₃ used in this third series is illustrated in the electron micrograph of Figure 3.

More specifically, electron micrographs of the various particles of Fe₂O₃ are shown as Figures 1-3, wherein Figure 1 illustrates Fe₂O₃ from heated iron(III) acetylacetonate of the first series, Figure 2 illustrates nano-sized Fe₂O₃ of the second series, and Figure 3 illustrates micro-sized Fe₂O₃ of the third series. Figure 4 is a representative transmission electron micrograph (TEM) image of the (D) heated reaction product of iron acetylacetonate (Fe (acac)) (i.e., nanoparticles) dispersed in Gel 4.

Samples of each series are evaluated to determine hardness after no ageing (time zero), after 70 hours of heat ageing at 225°C, after 250 hours of heat ageing at 225°C, after 500 hours of heat ageing at 225°C, and after 1000 hours of heat ageing at 225°C. The results of the gel hardness evaluations are shown below. The values for gel hardness in all tests below represent the average (mean) of 5 independent measurements of the respective sample.

| **Hours of Heat Ageing at 225°C** | **First Series ((D) Heated Reaction Product of Iron Acetylacetonate)** | **Second Series (Nano-Fe₂O₃)** | **Third Series (Micro-Fe₂O₃)** |
|---|---|---|---|
| 0 Hrs | 37 grams | 34 grams | 35 grams |
| 70 Hrs | 26 grams | 22 grams | 47 grams |
| 250 Hrs | 36 grams | 32 grams | 334 grams |
| 500 Hrs | 64 grams | 116 grams | 959 grams |
| 1000 Hrs | 156 grams | 527 grams | 1503 grams |

The data above establishes that the Gels of this disclosure have improved heat ageing as compared to comparative gels that are chemically identical except for the iron oxide differences. This data makes it clear that mere addition of Fe₂O₃ to gel compositions does not achieve the same results as this disclosure which heats the iron acetylacetonate to form the (D) heated reaction product and then uses the (D) heated reaction product to form the gels.

## Claims

1. A method of forming a gel that has improved thermal stability comprising combining (A) an organopolysiloxane having an average of at least 0.1 silicon-bonded alkenyl group per molecule and (B) a cross-linker having an average of at least 2 silicon-bonded hydrogen atoms per (C) a hydrosilylation catalyst, and (D) a heated reaction product of iron acetylacetonate wherein the iron acetylacetonate is present prior to heating in an amount of from about 0.05 to about 30 weight percent based on a total weight of (A) and (B), wherein (A) and (B) react via hydrosilylation in the presence of (C) and (D) to form the gel and (D) is produced by heating iron acetylacetonate in the presence of (E) a silicone fluid at a temperature of at least 120°C.

2. A method according to claim 1 wherein the gel has a hardness of less than about 1500 grams as measured after heat ageing for 1000 hours at 225°C that is calculated as a weight required to insert a TA-23 probe into the gel to a depth of 3 mm.

3. A method according to claim 1 or 2 wherein (E) is a non-functional silicone fluid.

4. A method according to claim 1 or 2 wherein the hydrosilylation reaction product is a hydrosilylation reaction product of (A), (B), and (E) a functional silicone fluid and wherein (A), (B), and (E) react via hydrosilylation in the presence of (C) and (D).

5. A method according to claim 1 or 2 wherein the iron acetylacetonate is combined with (E) a silicone fluid in an amount of from about 0.1 to about 10 weight percent based on a total weight of the iron acetylacetonate and (E).

6. A gel that has improved thermal stability and that is the hydrosilylation reaction product of:
(A) an organopolysiloxane having an average of at least 0.1 silicon-bonded alkenyl group per molecule; and
(B) a cross-linker having an average of at least 2 silicon-bonded hydrogen atoms per molecule;
wherein (A) and (B) react via hydrosilylation in the presence of;
(C) a hydrosilylation catalyst, and
(D) a heated reaction product of iron acetylacetonate wherein said iron acetylacetonate is present prior to heating in an amount of from about 0.05 to about 30 weight percent based on a total weight of (A) and (B) and (D) is produced by heating iron acetylacetonate in the presence of (E) a silicone fluid at a temperature of at least 120°C.

7. A gel according to claim 6 having a hardness of less than about 1500 grams as measured after heat ageing for 1000 hours at 225°C that is calculated as a weight required to insert a TA-23 probe into the gel to a depth of 3 mm.

8. A gel according to claim 6 or 7 wherein (E) is a non-functional silicone fluid.

9. An electronic article comprising an electronic component and a gel having improved thermal stability, wherein said gel is disposed on said electronic component and is the hydrosilylation reaction product of:
(A) an organopolysiloxane having an average of at least 0.1 silicon-bonded alkenyl group per molecule; and
(B) a cross-linker having an average of at least 2 silicon-bonded hydrogen atoms per molecule;
wherein (A) and (B) react via hydrosilylation in the presence of;
(C) a hydrosilylation catalyst, and
(D) a heated reaction product of a iron acetylacetonate wherein the iron acetylacetonate is present prior to heating in an amount of from about 0.05 to about 30 weight percent based on a total weight of (A) and (B) and (D) is produced by heating iron acetylacetonate in the presence of (E) a silicone fluid at a temperature of at least 120°C.

10. An electronic article according to claim 9 having a hardness of less than about 1500 grams as measured after heat ageing for 1000 hours at 225°C that is calculated as a weight required to insert a TA-23 probe into the gel to a depth of 3 mm.

11. An electronic article according to claim 9 or 10 wherein said iron acetylacetonate is heated in the presence of (E) a silicone fluid to form said (D) heated reaction product of the iron acetylacetonate.

12. An electronic article according to any one of claims 9 to 11 wherein said electronic component is a chip, wherein said gel encapsulates said chip, and wherein said electronic article is an insulated gate bipolar transistor.

## Patentansprüche

1. Ein Verfahren zum Bilden eines Gels, das eine verbesserte thermische Stabilität aufweist, beinhaltend das Kombinieren von (A) einem Organopolysiloxan mit einem Durchschnitt von mindestens 0,1 siliciumgebundenen Alkenylgruppen pro Molekül und (B) einem Vernetzungsmittel mit einem Durchschnitt von mindestens 2 siliciumgebundenen Wasserstoffatomen pro (C) einem Hydrosilylierungskatalysator und (D) einem erhitzten Reaktionsprodukt von Eisenacetylacetonat, wobei das Eisenacetylacetonat vor dem Erhitzen in einer Menge von etwa 0,05 bis etwa 30 Gewichtsprozent, bezogen auf das Gesamtgewicht von (A) und (B), vorhanden ist, wobei (A) und (B) über Hydrosilylierung in Gegenwart von (C) und (D) reagieren, um das Gel zu bilden, und (D) durch Erhitzen von Eisenacetylacetonat in Gegenwart von (E) einem Silikonfluid bei einer Temperatur von mindestens 120 °C produziert wird.

2. Verfahren gemäß Anspruch 1, wobei das Gel eine Härte von weniger als etwa 1 500 Gramm aufweist, wie gemessen nach Wärmealterung für 1 000 Stunden bei 225 °C, die berechnet ist als ein Gewicht, das erforderlich ist, um eine TA-23-Sonde bis zu einer Tiefe von 3 mm in das Gel einzuführen.

3. Verfahren gemäß Anspruch 1 oder 2, wobei (E) ein nicht funktionelles Silikonfluid ist.

4. Verfahren gemäß Anspruch 1 oder 2, wobei das Hydrosilylierungsreaktionsprodukt ein Hydrosilylierungsreaktionsprodukt von (A), (B) und (E) eines funktionellen Silikonfluids ist und wobei (A), (B) und (E) über Hydrosilylierung in Gegenwart von (C) und (D) reagieren.

5. Verfahren gemäß Anspruch 1 oder 2, wobei das Eisenacetylacetonat mit (E) einem Silikonfluid in einer Menge von etwa 0,1 bis etwa 10 Gewichtsprozent, bezogen auf das Gesamtgewicht des Eisenacetylacetonats und (E), kombiniert wird.

6. Ein Gel, das eine verbesserte thermische Stabilität aufweist und das das Hydrosilylierungsreaktionsprodukt von Folgendem ist:
(A) einem Organopolysiloxan mit einem Durchschnitt von mindestens 0,1 siliciumgebundenen Alkenylgruppen pro Molekül; und
(B) einem Vernetzer mit einem Durchschnitt von mindestens 2 siliciumgebundenen Wasserstoffatomen pro Molekül;
wobei (A) und (B) über Hydrosilylierung in Gegenwart von Folgendem reagieren:
(C) einem Hydrosilylierungskatalysator, und
(D) einem erhitzten Reaktionsprodukt von Eisenacetylacetonat, wobei das Eisenacetylacetonat vor dem Erhitzen in einer Menge von etwa 0,05 bis etwa 30 Gewichtsprozent, bezogen auf das Gesamtgewicht von (A) und (B), vorhanden ist, und (D) durch Erhitzen von Eisenacetylacetonat in Gegenwart von
(E) einem Silikonfluid bei einer Temperatur von mindestens 120 °C produziert wird.

7. Ein Gel gemäß Anspruch 6, das eine Härte von weniger als etwa 1 500 Gramm aufweist, wie gemessen nach Wärmealterung für 1 000 Stunden bei 225 °C, die berechnet ist als ein Gewicht, das erforderlich ist, um eine TA-23-Sonde bis zu einer Tiefe von 3 mm in das Gel einzuführen.

8. Gel gemäß Anspruch 6 oder 7, wobei (E) ein nicht funktionelles Silikonfluid ist.

9. Ein elektronischer Artikel, beinhaltend eine elektronische Komponente und ein Gel, das eine verbesserte thermische Stabilität aufweist, wobei das Gel auf der elektronischen Komponente angeordnet ist und das Hydrosilylierungsreaktionsprodukt von Folgendem ist:
(A) einem Organopolysiloxan mit einem Durchschnitt von mindestens 0,1 siliciumgebundenen Alkenylgruppen pro Molekül; und
(B) einem Vernetzer mit einem Durchschnitt von mindestens 2 siliciumgebundenen Wasserstoffatomen pro Molekül;
wobei (A) und (B) über Hydrosilylierung in Gegenwart von Folgendem reagieren:
(C) einem Hydrosilylierungskatalysator, und
(D) einem erhitzten Reaktionsprodukt eines Eisenacetylacetonats, wobei das Eisenacetylacetonat vor dem Erhitzen in einer Menge von etwa 0,05 bis etwa 30 Gewichtsprozent, bezogen auf das Gesamtgewicht von (A) und (B), vorhanden ist, und (D) durch Erhitzen von Eisenacetylacetonat in Gegenwart von
(E) einem Silikonfluid bei einer Temperatur von mindestens 120 °C produziert wird.

10. Elektronischer Artikel gemäß Anspruch 9, der eine Härte von weniger als etwa 1 500 Gramm aufweist, wie gemessen nach Wärmealterung für 1 000 Stunden bei 225 °C, die berechnet ist als ein Gewicht, das erforderlich ist, um eine TA-23-Sonde bis zu einer Tiefe von 3 mm in das Gel einzuführen.

11. Elektronischer Artikel gemäß Anspruch 9 oder 10, wobei das Eisenacetylacetonat in Gegenwart von (E) einem Silikonfluid erhitzt wird, um das (D) erhitzte Reaktionsprodukt des Eisenacetylacetonats zu bilden.

12. Elektronischer Artikel gemäß einem der Ansprüche 9 bis 11, wobei die elektronische Komponente ein Chip ist, wobei das Gel den Chip einkapselt, und wobei der elektronische Artikel ein Bipolartransistor mit isoliertem Gate ist.

## Revendications

1. Une méthode de formation d'un gel qui présente une stabilité thermique améliorée comprenant la combinaison (A) d'un organopolysiloxane présentant une moyenne d'au moins 0,1 groupe alcényle lié au silicium par molécule et (B) d'un agent réticulant présentant une moyenne d'au moins 2 atomes d'hydrogène liés au silicium par (C) un catalyseur d'hydrosilylation, et (D) d'un produit de réaction chauffé d'acétylacétonate de fer dans laquelle l'acétylacétonate de fer est présent préalablement au chauffage en une quantité allant d'environ 0,05 à environ 30 pour cent en poids rapporté au poids total de (A) et de (B), dans laquelle (A) et (B) réagissent par l'intermédiaire d'une hydrosilylation en présence de (C) et de (D) afin de former le gel et (D) est produit par chauffage de l'acétylacétonate de fer en présence (E) d'un fluide de silicone à une température d'au moins 120 °C.

2. Une méthode selon la revendication 1 dans laquelle le gel présente une dureté inférieure à environ 1 500 grammes telle que mesurée après vieillissement à la chaleur pendant 1 000 heures à 225 °C qui est calculée comme un poids requis pour insérer une sonde TA-23 dans le gel jusqu'à une profondeur de 3 mm.

3. Une méthode selon la revendication 1 ou la revendication 2 dans laquelle (E) est un fluide de silicone non fonctionnel.

4. Une méthode selon la revendication 1 ou la revendication 2 dans laquelle le produit de réaction d'hydrosilylation est un produit réactionnel d'hydrosilylation de (A), de (B), et (E) d'un fluide de silicone fonctionnel et dans laquelle (A), (B), et (E) réagissent par l'intermédiaire d'une hydrosilylation en présence de (C) et de (D).

5. Une méthode selon la revendication 1 ou la revendication 2 dans laquelle l'acétylacétonate de fer est combiné avec (E) un fluide de silicone en une quantité allant d'environ 0,1 à environ 10 pour cent en poids rapporté à un poids total de l'acétylacétonate de fer et de (E).

6. Un gel qui présente une stabilité thermique améliorée et qui est le produit de réaction d'hydrosilylation :
(A) d'un organopolysiloxane présentant une moyenne d'au moins 0,1 groupe alcényle lié au silicium par molécule ; et
(B) d'un agent réticulant présentant une moyenne d'au moins 2 atomes d'hydrogène liés au silicium par molécule ;
dans laquelle (A) et (B) réagissent par l'intermédiaire d'une hydrosilylation en présence :
(C) d'un catalyseur d'hydrosilylation, et
(D) d'un produit de réaction chauffé d'acétylacétonate de fer dans lequel ledit acétylacétonate de fer est présent préalablement au chauffage en une quantité allant d'environ 0,05 à environ 30 pour cent en poids rapporté à un poids total de (A) et de (B) et (D) est produit par chauffage de l'acétylacétonate de fer en présence (E) d'un fluide de silicone à une température d'au moins 120 °C.

7. Un gel selon la revendication 6 présentant une dureté inférieure à environ 1 500 grammes telle que mesurée après vieillissement à la chaleur pendant 1 000 heures à 225 °C qui est calculée comme un poids requis pour insérer une sonde TA-23 dans le gel jusqu'à une profondeur de 3 mm.

8. Un gel selon la revendication 6 ou la revendication 7 dans lequel (E) est un fluide de silicone non fonctionnel.

9. Un article électronique comprenant un composant électronique et un gel présentant une stabilité thermique améliorée, dans lequel ledit gel est disposé sur ledit composant électronique et est le produit de réaction d'hydrosilylation :
(A) d'un organopolysiloxane présentant une moyenne d'au moins 0,1 groupe alcényle lié au silicium par molécule ; et
(B) d'un agent réticulant présentant une moyenne d'au moins 2 atomes d'hydrogène liés au silicium par molécule ;
dans lequel (A) et (B) réagissent par l'intermédiaire d'une hydrosilylation en présence :
(C) d'un catalyseur d'hydrosilylation, et
(D) d'un produit de réaction chauffé d'un acétylacétonate de fer dans lequel l'acétylacétonate de fer est présent préalablement au chauffage en une quantité allant d'environ 0,05 à environ 30 pour cent en poids rapporté à un poids total de (A) et de (B) et (D) est produit par chauffage de l'acétylacétonate de fer en présence (E) d'un fluide de silicone à une température d'au moins 120 °C.

10. Un article électronique selon la revendication 9 présentant une dureté inférieure à environ 1 500 grammes telle que mesurée après vieillissement à la chaleur pendant 1 000 heures à 225 °C qui est calculée comme un poids requis pour insérer une sonde TA-23 dans le gel jusqu'à une profondeur de 3 mm.

11. Un article électronique selon la revendication 9 ou la revendication 10 dans lequel ledit acétylacétonate de fer est chauffé en présence (E) d'un fluide de silicone afin de former (D) ledit produit de réaction chauffé de l'acétylacétonate de fer.

12. Un article électronique selon n'importe laquelle des revendications 9 à 11 dans lequel ledit composant électronique est une puce, dans lequel ledit gel encapsule ladite puce, et dans lequel ledit article électronique est un transistor bipolaire à porte isolée.
